# EUROPEAN PATENT SPECIFICATION

(11) **EP 0 528 243 B1**
(45) Date of publication and mention of the grant of the patent: **17.04.1996**
(21) Application number: 92113191.8
(22) Date of filing: 03.08.1992
(51) Int. Cl.: B23B 51/02, B23C 5/00, B23P 15/32, B23C 5/10

(54) **Diamond rotary cutter flute geometry**
Hohlkehlgeometrie an rotierendem Diamant-Schneidwerkzeug
Géométrie du congé d'un outil coupant diamanté

(30) Priority: 16.08.1991 US 745811
(43) Date of publication of application: 24.02.1993
(73) Proprietor: SMITH INTERNATIONAL, INC., Houston, Texas 77032 (US)
(72) Inventor: Rodriguez, Arturo A., Orem, Utah 84057 (US); Crockett, Ronald B., Provo, Utah 84601 (US)
(74) Representative: Grünecker, Kinkeldey, Stockmair & Schwanhäusser Anwaltssozietät

(56) References cited:
- DE-A- 2 208 258
- US-A- 4 762 445
- US-A- 4 991 467
- US-A- 5 031 484

## Description

This invention relates to a process for forming a rotary cutter according to the preamble of claim 1, a rotary cutter according to the preamble of claim 6 and a rotary blank for producing a rotary cutter as set out in claim 10. The rotary cutter is a helically fluted cutting tool with polycrystalline diamond cutting edges.

Helically fluted cutting tools such as end mills are generally required to perform severe machining operations under extremely adverse conditions. The cutting end of a helically fluted end mill includes at least a pair of cutting edges on opposite surfaces of the end mill blank.

Oppositely directed cutting surfaces positioned at the cutting end of the mill blank are subjected to axial and torsional loads which create material demands on the fabrication of the milling cutter. Clearly the material of the cutting edges should be as hard as possible to cut a workpiece and it should be heat resistant, as well, to maintain the cutting edge of the milling cutter at elevated temperatures. Moreover, the material of the body of the cutter blank must be both rigid and tough to resist deflection and to maintain the integrity of the cutter under loads while the cutter is being used. The foregoing requirements have resulted in compromises in material selection since hard materials tend to be brittle while tough materials tend to wear quite easily.

This invention has application for other types of rotary cutting tools such as router bits, drills, countersinks, counterbores, reamers, taps, and the like.

The prior art teaches a combination of materials having the characteristics of hardness and wear resistance at the cutting surfaces and toughness and rigidity of the body and shaft. It has been previously proposed to form the cutting surfaces of one material and the body and shaft of another. This has resulted in a variety of combinations such as tungsten carbide or diamond inserts or tips on carbon steel or carbide shafts.

These combinations while individually useful have a common disadvantage, i.e. the braze connection between the insert or tip and a shaft. Tungsten carbide can be soldered or bled directly to a steel or carbide shaft. However a diamond tip or insert must first be adhered to a carbide substrate which is in turn soldered or brazed to the shaft. Diamond particles are typically formed into a compact of PCD (polycrystalline diamond) and simultaneously bonded to a carbide substrate with a metallic catalyst in a high pressure-high temperature press. At atmospheric pressures, however, the metal which catalyzes the bonding of the diamond particles to each other and to the substrate in the press will also catalyze the conversion of diamond to graphite at temperatures above 700°C which will cause disintegration of the PCD compact. Accordingly, a low temperature solder or braze connection is used to attach the substrate to the shaft. This braze connection limits the effective life of such drilling tools since it is softer than either the substrate or the shaft. The braze thus becomes the weakest point of the tool construction and the limiting factor in the tool usage.

U.S. Patent No. 4,762,445 teaches a helically fluted twist drill apparatus in which offset opposed veins of sintered abrasive particulate, such as polycrystalline diamond, are embedded within a drill blank made of a less abrasive material such as carbide. The non-aligned veins of abrasive material themselves intersect through juxtapositioning adjacent the point and web of the drill. The veins of diamond are 180° opposed across the tip of the helical drill blank. The opposing veins intersect at the center or axis of the helical drill to provide a concentration of diamond at the tip of the twist drill. However, the veins of diamonds are relatively shallow at the tip of the twist drill and tend to wear out rather quickly.

A device produced by a process according to the preamble of claims 1 and 6 is known from US-A-5 031 484. Therein is described an end mill, wherein at least a pair of spiral grooves is formed in the mill side walls. At least a pair of grooves is formed in the flutes whereby the grooves essentially follow the helical path of the flutes. Each groove includes polycrystalline diamond formed along a leading edge of each flute.

The above prior art forms radially aligned grooves in cutter blanks prior to sintering of the diamond cutter material in the grooves. When the flutes in the shank of the tool are formed after the diamond sintering process secures the diamond in their respective grooves, much of the leading edge of the formed diamond is removed or ground away, especially where it is desired to have a positive rake angle of the diamond with respect to a workpiece.

Furthermore DE-A-2 208 258 describes an end mill comprising helically extending flutes wound about a central axis of the end mill. Within the helical flutes there are mounting cites for mounting substantially helical wound cutting bars which, when mounted within the flutes, provide a cutting edge formed from the hard material. The mounted cutting bars are helically wound with respect to an axis B which is offset and/or inclined to the centre axis of the end mill.

### BRIEF SUMMARY OF THE INVENTION

The present invention overcomes the problems of the foregoing prior art by providing a process according to claim 1, and a rotary cutter and cutter blank in accordance with claims 6 and 10, respectively.

Thus a helically fluted cutting tool with a positive or negative rake angle for each of the helical grooves in the cutter blank is provided.

The grooves are filled with compacted polycrystalline diamond (PCD) or cubic boron nitride (CBN). The subsequently formed concave flutes conform to the angle of the grooves. Thus, very little of the diamond or CBN is lost when the diamond or CBN is sharpened to the positive or negative rake angle.

In an embodiment a diamond rotary cutter is made by first forming a blank body with at least a pair of grooves in sides of the blank body. The grooves are radially oriented and formed with at least one edge at an angle that substantially conforms to the rake angle of the concave flutes that are subsequently formed in the rotary cutter blank. The angled grooves formed in the cutter blank are filled with hard material selected from the group consisting of diamond and cubic boron nitride. The hard material in the grooves in the cutter blank is sintered in a sufficiently high pressure press for forming polycrystalline hard material. Concave flutes are formed in the cutter blank substantially parallel to an edge of the material in the angled grooves, and the hard material is ground at an angle substantially corresponding to the angle of the edge of the hard material, thereby providing a hard material cutting edge along a leading edge of the sintered hard material without removing a lot of the hard material.

This invention provides a technique for forming diamond containing grooves that conform to the angle of the leading cutting edge of the sintered diamond whether the angle is positive, negative or ninety degrees to an adjacent workpiece.

By carefully forming diamond containing grooves at the correct cutting angle, the flutes may be subsequently formed in the shank of the tool without removing sintered diamond from the grooves, resulting in ease of removing material to form the flutes while maintaining the integrity of the sintered diamond during the diamond sharpening process.

Such a cutting tool is longer lasting and cheaper to fabricate since the integrity and mass of the diamond is assured during the tool fabrication process.

### BRIEF DESCRIPTION OF THE DRAWINGS

The above noted advantages of the present invention will be more fully understood upon a study of the following description in conjunction with the detailed drawings wherein:
FIGURE 1 is a perspective view of a fluted end mill;
FIGURE 2 is an end view taken through 2-2 of FIGURE 1;
FIGURE 3 is a perspective view of an end mill blank with four helical flutes machined therein;
FIGURE 4 is a side view of an end mill blank with a pair of helical flutes 180° from each other;
FIGURE 5 is an end view taken through 5-5 of FIGURE 4;
FIGURE 6 is a cross-section of the prior art fluted cutter blank illustrating the radially aligned flute grooves retaining sintered diamond therein;
FIGURE 7 is a cross-section of a fluted cutter blank with angled flutes intersecting a radial line resulting in a diamond cutting edge at a positive rake angle; and
FIGURE 8 is a cross-section of a fluted cutter blank with a "V" groove intersecting a radial line which also results in a diamond cutting edge at a positive rake angle with respect to a work piece.

### DESCRIPTION

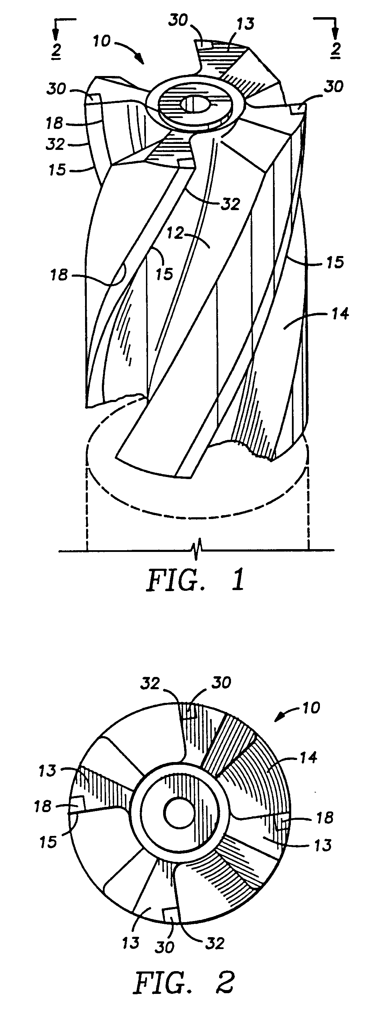

The diamond end mill of FIGURE 1 generally designated as 10 comprises an end mill blank body 12 having, for example, four flutes 14 circumferentially and equidistantly spaced around the body. The body of the end mill may, for example, be fabricated from a hard and tough material such as tungsten carbide. A helical groove 18 is formed in the leading edge 15 of the flutes 14. The angle of the groove conforms to the shape of the subsequently formed flute 14. A hard material selected from the group consisting of sintered polycrystalline diamond (PCD) or CBN vein 30 is formed in the helical groove 18. Cutting edges 32 are ground into the sintered diamond material 30 pressed in the helical groove 18 adjacent to the flutes of the drill blank. The tungsten carbide drill blank may then be metallurgically bonded to a steel or carbide drill shank 16 along juncture 17. The metallurgical bond may, for example, be a braze.

Turning now to FIGURE 2, the end 13 of the mill further illustrates the helically angled grooves 18 forming the leading edge of the flutes. The PCD or CBN vein 30 is formed by filling the helical grooves with powdered hard material which is then compacted and sintered within the grooves in a high pressure press as described in detail in U.S. Patent Nos. 4,991,467 and 5,031,484. The flutes 14 and the cutting edge 32 is ground into the PCD material after the sintering process is complete.

Since the angle of the edge of the material in the groove conforms to the leading cutting edge of the sintered diamond, a minimum of grinding is required. This results in maximum diamond in the grooves with a minimum loss of diamond during the sharpening process.

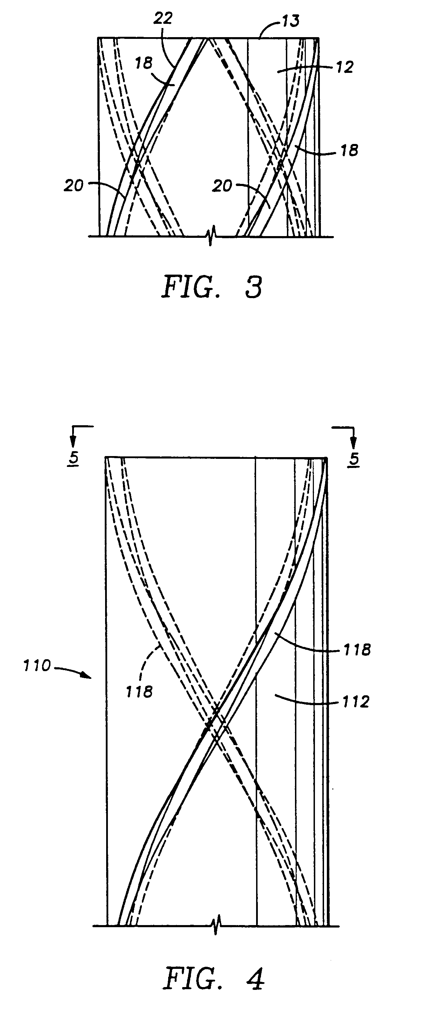

Turning now to FIGURE 3, the tungsten carbide drill blank body 12 is formed with, for example, four helically configured angled grooves 18 therein. The flutes are subsequently formed in the mill body after the diamond is sintered within grooves. The helically formed grooves are equidistantly spaced around the outer circumferential walls of the blank and provide a receptacle for the PCD powder compacted therein. The angled sides 20 of the helical groove preferably transition into a rounded bottom 22 of the groove. Identical sides 20 are formed in each of the grooves. The reason for the rounded bottom of the groove is to assure that the polycrystalline diamond powder material is packed into the groove without any possibility of voids. If the sides of the groove were 90° to the bottom of the groove then the sharp 90° corners could cause stress risers and voids in the diamond material.

With reference now to FIGURE 4, an alternate end mill blank 110 is illustrated with a pair of helically angled grooves 118 formed in the blank body 112.

One may also provide diamond cutters with one or more angled grooves that substantially parallel an axis of the cutter blank body. One may also provide cutter edges across the ends 13 and 113 of the cutter blanks 12 and 112 to enhance plunging and milling operations without departing from the scope of this invention.

Referring now to FIGURES 1, 2 and 5, the angled grooves 18 and 118 are compacted with diamond powder (or boron nitride powder) and sintered in a sufficiently high pressure press for forming polycrystalline material. A solid mass of polycrystalline diamond in the angled grooves is thus formed in the blank side walls of the end mill body. The end mill blank is subsequently machined to form the flutes 14. A following grinding process forms the cutting edges 32 on the sides of the blank bodies with a minimum loss of diamond since the grooves are cut to conform to the angle of the flutes formed in the body.

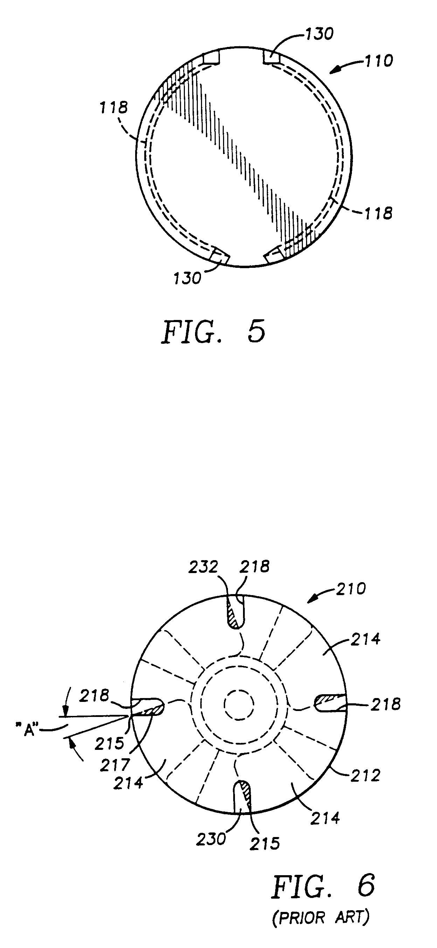

The prior art of FIGURE 6 illustrates a cross-section of an end mill 210 with grooves 218 formed in the shank body 212. The diamond material 230 and groove 218 are oriented radially, hence, when the flute 214 is formed in the shank 212 and the diamond material is sharpened, at least one third of the diamond material 230 is lost as is indicated in the shaded area 217.

This loss of diamond is especially damaging when a positive cutter rake angle "A" is desired. Not only is it time consuming to grind the diamond material 230, it is very hard on the tool sharpening devices. Moreover, the resultant loss of diamond shortens the life of the diamond cutting tool.

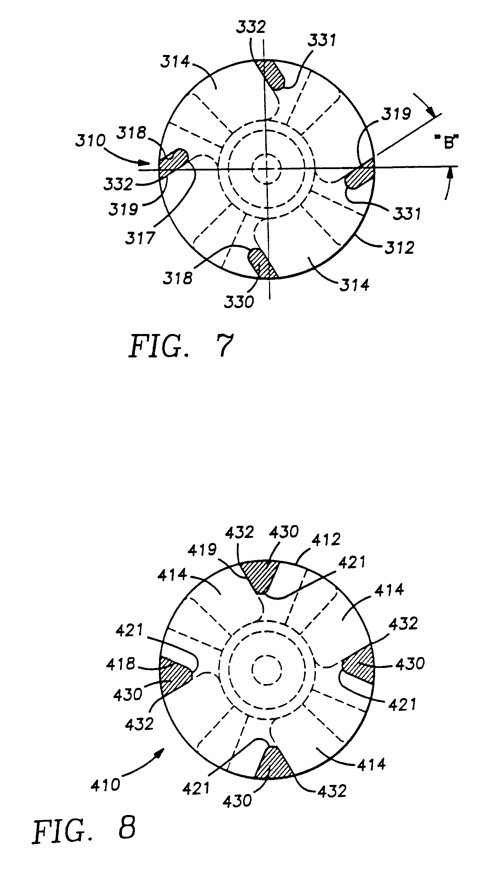

Turning now to FIGURE 7, the groove 318 in the cutter body 312 for receiving PCD is angled from a radial line such that the groove now is aligned with the concave flutes 314. In addition, the cutting edge 332 of the diamond material 330 is at a positive rake angle with respect to an adjacent work piece (not shown). Angle "B" determines the degree of rake angle of the cutting edge 332.

When the flutes are formed in the body, material is removed parallel with the cutting face 319 and tangents the base 317 of the diamond material 330. Clearly, very little diamond material is removed during the flute forming and diamond sharpening process.

When compared to the prior art of FIGURE 6, it can readily be observed that the predetermined angle of the groove enables the cutting tool 310 to be much more durable hence, longer lasting.

FIGURE 8 depicts another embodiment wherein the groove 418 in the body 412 of the cutter 410 is formed in a "V", the bottom of the "V" being rounded at 421. Rounding at the base 421 as well as rounding out the base 331 (Figure 7) to assure that the diamond powder is well compacted was heretofore described with reference to FIGURE 3.

The leading cutting face 419 again is at a positive rake angle whereby the cutting edge 432 is at a positive angle with respect to an adjacent workpiece (not shown), that is, at a positive rake angle with respect to a tangent to the surface of the cutter. Again, the flute is formed along the face 419 and transitions from the diamond face 419 at base 417 thus requiring little removal of material from the diamond during the flute forming and diamond sharpening process as heretofore described.

The diamond grooves and flutes may be formed at a negative rake angle from that which has been described without departing from the scope of this invention. One may also form the grooves and flutes without hellical paths without departing from the scope of this invention.

## Claims

1. A process for forming a rotary cutter comprising the steps of:
forming a blank body (12), the blank body (12) having a first cutting end and a second base end;
forming at least a pair of grooves (18, 318, 418) in sides of the blank body (12) from the first cutting end and extending toward the base end;
filling the grooves (18, 318, 418) formed in the blank body (12) with hard material selected from the group consisting of diamond and cubic boron nitride;
sintering the hard material in the grooves (18, 318, 418) in the blank body (12) in a sufficiently high pressure press for forming polycrystalline hard material and providing therewith a cutter blank; and
forming concave flutes (14, 314, 414) in the cutter blank which forms a cutting edge (32, 332, 432) on the hard material in the grooves (18, 318, 418) at a selected rake angle (B); and
**characterised by**,
forming the grooves (18, 318, 418) radially oriented and with at least one edge at an angle that substantially conforms to the rake angle (B) of the concave flutes (14, 314, 414) that are subsequently formed in the rotary cutter blank for grinding the hard material sintered in the grooves (18, 318, 418) formed in the blank body (12) at the rake angle (B) substantially corresponding to the angle (B) of the edge of the hard material in the grooves (18, 318, 418), thereby providing a hard material cutting edge (32, 332, 432) along a leading edge of the sintered hard material and a rake angle (B) substantially corresponding to the angle of the edge of the grooves (18, 318, 418).

2. The process as set forth in claim 1 comprising the step of forming sloped side walls in the shape of a "V" in the blank body (12) for the grooves (418), the "V" grooves (418) being narrower in the bottom (421) of the groove (418) than a width of the groove (418) at a surface of the blank body (12), one of the sloped side walls providing a positive rake angle (B) with respect to a tangent to the surface of the cutter.

3. The process as set forth in claim 1 comprising the step of forming the grooves (18, 318, 418) with a positive rake angle (B).

4. The process as set forth in claim 1 comprising the step of forming the grooves (18) with a negative rake angle (B).

5. The process as set forth in any one of claims 1, 2, 3, 7 or 8 further comprising the step of brazing a cutter shank to the second base end of the cutter.

6. A rotary cutter made by, a, process as set forth in one of claims 1 to 5 and made from a rotary cutter blank having first and second ends and comprising at least a pair of concave flutes (14, 314, 414) formed in the side walls of the cutter blank with a rake angle (B) at the leading edge (15) of each flute (14, 314, 414), the blank comprising grooves (18, 318, 418) in side walls of the blank adjacent the location the flutes (14, 314, 414) are subsequently formed, and hard material selected from the group consisting of polycrystalline diamond and cubic boron nitride secured within the grooves (18, 318, 418) formed in the side walls, and **characterised by** each of the grooves (18, 318, 418) having at least one edge that is radially oriented substantially at an angle that conforms to the rake angle (B) of the concave flutes (14, 314, 414) that are subsequently formed adjacent the grooves (18, 318, 418) in the rotary cutter blank, and the hard material and the cutter blank having been subsequently machined to form the flutes (14, 314, 414) and a cutting edge (32, 332, 432) along an angled leading edge formed by the hard material.

7. The rotary cutter as set forth in claim 6 wherein the angled grooves (18, 318, 418) are oriented at a positive rake angle (B) with respect to a tangent to the surface of the cutter.

8. The rotary cutter as set forth in claim 6 wherein the angled grooves (18, 318, 418) are oriented at a negative rake angle (B) with respect to a tangent to the surface of the cutter.

9. The rotary cutter as set forth in claim 6 wherein the grooves (418) are formed in a "V", a cutting leading edge (432) of the hard material in the groove (418) being oriented with a positive rake angle (B) with respect to a tangent to the surface of the cutter.

10. A rotary blank for producing a rotary cutter of one of claims 6 to 9 by a process as set forth in one of claims 1 to 5 and comprising a blank body (12) having first and second ends, grooves in side walls of the blank body (12) adjacent a location at which concave flutes (14, 314, 414) are intended to be subsequently formed with a rake angle (B) at the leading edge (15) of each flute (14, 314, 414), and hard material selected from the group consisting of polycrystalline diamond and cubic boron nitride secured within the grooves (18, 318, 418) having at least one edge that is radially oriented substantially at an angle that conforms to the rake angle (B) of the concave flutes (14, 314, 414) that are intended to be subsequently formed adjacent the grooves (18, 318, 418) in the cutter blank so that the hard material and the cutter blank can be subsequently machined to form the flutes (14, 314, 414) and a cutting edge (32, 332, 432) along an angled leading edge formed by the hard material.

11. The rotary cutter blank as set forth in claim 10 wherein the angles grooves (18, 318, 418) are oriented at a positive rake angle (B) with respect to a tangent to the surface of the cutter blank.

12. The rotary cutter blank as set forth in claim 10 wherein the angled grooves (18, 318, 418) are oriented to a negative rake angle (B) with respect to a tangent to the surface of the cutter blank.

13. The rotary cutter blank as set forth in claim 10 wherein the grooves (418) are formed in a "V", a leading edge (432) of the hard material in the groove (418) being oriented with a positive rake angle (B) with respect to a tangent to the surface of the cutter blank.

## Patentansprüche

1. Verfahren zum Formen eines Rotationsschneidwerkzeuges, das die Schritte umfaßt:
Formen eines Rohlinggrundkörpers (12), wobei der Rohlinggrundkörper (12) ein erstes Schneidende und ein zweites Basisende aufweist;
Formen von mindestens einem Paar Nuten (18, 318, 418) in Seiten des Rohlinggrundkörpers (12), die sich von dem ersten Schneidende in Richtung des Basisende erstrecken;
Füllen der Nuten (18, 318, 418), die in den Rohlinggrundkörper (12) eingeformt sind, mit einem harten Werkstoff, der aus der Gruppe, umfassend Diamant und kubisches Bornitrid, ausgewählt ist;
Sintern des harten Werkstoffes in den Nuten (18, 318, 418) in dem Rohlinggrundkörper (12) in einer ausreichenden Hochdruckpresse zum Formen von polykristallinem Hartwerkstoff, um somit einen Schneidwerkzeugrohling bereitzustellen; und
Formen von konkaven Hohlkehlen (14, 314, 414) in dem Schneidwerkzeugrohling, welches Schneidkanten (32, 332, 432) an dem Hartwerkstoff in den Nuten (18, 218, 418) in einem gewählten Spanwinkel (B) formt; und
**gekennzeichnet durch**,
Formen der Nuten (18, 318, 418) in radialer Orientierung und mit mindestens einer Kante in einem Winkel, der im wesentlichen an den Schneidwinkel (B) der konkaven Hohlkehlen (14, 314, 414) angepaßt ist, die nachfolgend in den Schneidwerkzeugrohling zum Schleifen des Hartwerkstoffes, der in den Nuten (18, 318, 418) gesintert ist, und die in den Rohlinggrundkörper (12) in dem Spanwinkel (B), der im wesentlichen mit dem Winkel (B) der Kante des Hartwerkstoffes in den Nuten (18, 318, 418) übereinstimmt, eingeformt sind, um dabei eine Schneidkante (32, 332, 432) aus Hartwerkstoff entlang einer Vorderflanke des gesinterten Hartwerkstoffs und einem Schneidwinkel (B), der im wesentlichen mit dem Winkel der Kante der Nuten (18, 318, 418) übereinstimmt, bereitzustellen.

2. Verfahren gemäß Anspruch 1, mit dem Schritt des Formens geneigter Seitenwände in der Form eines "V" in den Rohlinggrundkörper (12) für die Nuten (418), wobei die "V" - Nuten (418) enger am Boden (421) der Nut (418) als eine Breite der Nut (418) an einer Außenseite des Rohlinggrundkörpers (12) aufweisen, wobei eine der geneigten Seitenwände einen positiven Schneidwinkel (B) bezüglich einer Tangente an der Außenseite des Schneidwerkzeugs bereitstellt.

3. Verfahren gemäß Anspruch 1, mit dem Schritt des Formens der Nuten (18, 318 418) mit einem positiven Spanwinkel (B).

4. Verfahren gemäß Anspruch 1, mit dem Schritt des Formens der Nuten (18) mit einem negativen Spanwinkel (B).

5. Verfahren gemäß einem der Ansprüche 1, 2, 3, 7 oder 8, mit weiterhin dem Schritt des Hartlötens eines Schneidwerkzeugschafts an das zweite Basisende des Schneidwerkzeuges.

6. Rotationsschneidwerkzeug, hergestellt durch ein Verfahren gemäß einem der Ansprüche 1 bis 5 und hergestellt aus einem Rotationsschneidwerkzeugrohling mit ersten und zweiten Enden und mit mindestens einem Paar konkaver Hohlkehlen (14, 314, 414), die in die Seitenwände des Schneidwerkzeugrohlings in einem Schneidwinkel (B) an der Führungskante (15) von jeder Hohlkehle (14, 314, 414) eingeformt sind, wobei der Rohling Nuten (18, 318, 418) in den Seitenwänden des Rohlings angrenzend der Stelle, in die die Hohlkehlen (14, 314, 414) nachfolgend eingeformt werden, umfaßt, und Hartwerkstoff, der aus der Gruppe, umfassend polykristalliner Diamant und kubisches Bornitrid, ausgewählt ist, und in den Nuten (18, 318, 418), die in die Seitenwände eingeformt sind, befestigt ist,
**gekennzeichnet dadurch**,
daß jede der Nuten (18, 318, 418) mindestens eine Kante aufweist, die im wesentlichen in einem Winkel radial orientiert ist, der an den Spanwinkel (B) der konkaven Hohlkehlen (14, 314, 414) angepaßt ist, die nachfolgend angrenzend den Nuten (18, 318, 418) in den Rotationsschneidwerkzeugrohling eingeformt sind, und der Schneidwerkzeugrohling nachfolgend maschinell bearbeitet wurde, um die Hohlkehlen (14, 314, 414) und eine Schneidkante (32, 332, 432) entlang einer gewinkelten Vorderflanke, die durch den Hartwerkstoff geformt ist, zu formen.

7. Rotationsschneidwerkzeug gemäß Anspruch 6, worin die winkligen Nuten (18, 318, 418) in einem positiven Schneidwinkel (B) bezüglich einer Tangente an der Außenseite des Schneidwerkzeuges orientiert sind.

8. Rotationsschneidwerkzeug gemäß Anspruch 6, worin die winkligen Nuten (18, 318, 418) in einem negativen Schneidwinkel (B) bezüglich einer Tangenten an der Außenseite des Schneidwerkzeuges orientiert sind.

9. Rotationsschneidwerkzeug gemäß Anspruch 6, worin die Nuten (418) in einem "V" geformt sind, wobei eine Schneidvorderkante (432) des Hartwerkstoffs in der Nut (418) in einem positiven Spanwinkel (B) bezüglich einer Tangenten an der Außenseite des Schneidwerkzeugs orientiert ist.

10. Rotationsrohling zum Herstellen eines Rotationsschneidwerkzeuges gemäß einem der Ansprüche 6 bis 9 durch ein Verfahren gemäß einem der Ansprüche 1 bis 5 und mit einem Rohlinggrundkörper (12) mit erstem und zweitem Ende, Nuten in den Seitenwänden des Rohlinggrundkörpers (12) angrenzend einer Position, an welcher konkave Hohlkehlen (14, 314, 414) beabsichtigt sind nachfolgend in einem Schneidwinkel (B) an der Vorderflanke (15) jeder Hohlkehle (14, 314, 414) eingeformt zu werden, und Hartwerkstoff, der aus der Gruppe, umfassend polykristalliner Diamant und kubisches Bornitrid, ausgewählt ist und in den Nuten (18, 318, 418) befestigt ist, die mindestens eine Kante aufweisen, die im wesentlichen in einem Winkel radial orientiert ist, der an den Spanwinkel (B) der konkaven Hohlkehlen (14, 314, 414) angepaßt ist, die beabsichtigt sind nachfolgend angrenzend der Nuten (18, 318, 418) in den Schneidwerkzeugrohling eingeformt zu werden, so daß der Hartwerkstoff und der Schneidwerkzeugrohling nachfolgend maschinell bearbeitet wird, um die Hohlkehlen (14, 314, 414) oder eine Schneidkante (32, 332, 432) entlang einer winkligen Vorderflanke, die durch den Hartwerkstoff geformt ist, zu formen.

11. Rotationsschneidwerkzeugrohling gemäß Anspruch 10, worin die winkligen Nuten (18, 318, 418) in einem positiven Schneidwinkel (B) bezüglich einer Tangente an der Außenseite des Schneidwerkzeugrohlings orientiert sind.

12. Rotationsschneidwerkzeugrohling gemäß Anspruch 10, worin die winkligen Nuten (18, 318, 418) in einem negativen Schneidwinkel (B) bezüglich einer Tangente an der Außenseite des Schneidwerkzeugrohlings orientiert sind.

13. Rotationsschneidwerkzeugrohling gemäß Anspruch 10, worin die Nuten (418) in einem "V" geformt sind, wobei eine Vorderkante (432) des Hartwerkstoffes in der Nut (418) in einem positiven Spanwinkel (B) bezüglich einer Tangenten an der Außenseite des Schneidwerkzeugrohlings orientiert ist.

## Revendications

1. Procédé destiné à former un outil coupant rotatif comprenant les étapes de :
. formage d'un corps de flan (12), le corps de flan (12) comportant une première extrémité de coupe et une seconde extrémité d'embase;
. formage d'au moins une paire de gorges (18, 318, 418) dans les côtés du corps de flan (12) à partir de la première extrémité de coupe et s'étendant vers l'extrémité d'embase;
. remplissage des gorges (18, 318, 418) formées dans le corps de flan (12) avec un matériau dur sélectionné dans un groupe de matériaux se composant de diamant et de nitrure de bore cubique;
. frittage du matériau dur dans les gorges (18, 318, 418) dans le corps de flan (12) dans une presse à pression suffisante pour former un matériau dur polycristallin et procurer avec celui-ci un flan coupant; et
. formage de congés concaves (14, 314, 414) dans le flan coupant qui forment une arête de coupe (32, 332, 432) sur le matériau dur dans les gorges (18, 318, 418) à un angle de coupe sélectionné (B); et
caractérisé par,
le formage de gorges (18, 318, 418) orientées radialement et comportant au moins une arête à angle qui est essentiellement en conformité avec l'angle de coupe (B) des congés concaves (14, 314, 414) qui sont formés par la suite dans le flan coupant rotatif, pour affiler le matériau dur fritté dans les gorges (18, 318, 418) formées dans le corps de flan (12) à l'angle de coupe (B) correspondant essentiellement à l'angle (B) de l'arête du matériau dur dans les gorges (18, 318, 418), fournissant ainsi une arête de coupe en matériau dur (32, 332, 432) le long d'une arête d'attaque du matériau dur fritté et un angle de coupe (B) correspondant essentiellement à l'angle de l'arête des gorges (18, 318, 418).

2. Procédé comme énoncé dans la revendication 1 comprenant l'étape de formage de parois latérales inclinées en forme de "V" dans le corps de flan (12) pour les gorges (418), les gorges en "V" (418) étant plus étroites dans l'embase (421) de la gorge (418) que la largeur de la gorge (418) à la surface du corps de flan (12), l'une des parois latérales inclinées fournissant un angle de coupe positif (B) par rapport à une tangente à la surface de l'outil coupant.

3. Procédé comme énoncé dans la revendication 1 comprenant l'étape de formage des gorges (18, 318, 418) avec un angle de coupe positif (B).

4. Procédé comme énoncé dans la revendication 1 comprenant l'étape de formage des gorges (18) avec un angle de coupe négatif (B).

5. Procédé comme énoncé dans l'une quelconque des revendications 1, 2, 3, 7, ou 8 comprenant en outre l'étape de brasage d'un fût d'outil coupant sur la seconde extrémité d'embase de l'outil coupant.

6. Outil coupant rotatif fabriqué selon un procédé comme énoncé dans l'une des revendications 1 à 5, et formé par un flan coupant rotatif comportant une première et une seconde extrémités et comprenant au moins une paire de congés concaves (14, 314, 414) formés dans les parois latérales du flan coupant à un angle de coupe (B) sur l'arête d'attaque (15) de chaque congé (14, 314, 414), le flan comprenant des gorges (18, 318, 418) dans les parois latérales du flan adjacentes à l'emplacement des congés (14, 314, 414) qui sont formés par la suite, et un matériau dur sélectionné dans un groupe de matériaux se composant de diamant polycristallin et de nitrure de bore cubique fixé à l'intérieur des gorges (18, 318, 418) formées dans les parois latérales, et
caractérisé en ce que
chacune des gorges (18, 318, 418) comporte au moins une arête qui est essentiellement orientée radialement à un angle qui est en conformité avec l'angle de coupe (B) des congés concaves (14, 314, 414) qui sont formées par la suite de manière adjacente aux gorges (18, 318, 418) dans le flan coupant rotatif, et que le matériau dur et le flan coupant ont été usinés par la suite afin de former les congés (14, 314, 414) et une arête de coupe (32, 332, 432) le long d'une arête d'attaque en angle formée par le matériau dur.

7. Outil coupant rotatif comme énoncé dans la revendication 6 dans lequel les gorges en angle (18, 318, 418) sont orientées à un angle de coupe positif (B) par rapport à une tangente à la surface de l'outil coupant.

8. Outil coupant rotatif comme énoncé dans la revendication 6 dans lequel les gorges en angle (18, 318, 418) sont orientées à un angle de coupe négatif (B) par rapport à une tangente à la surface de l'outil coupant.

9. Outil coupant rotatif comme énoncé dans la revendication 6 dans lequel les gorges (418) ont une forme de "V", une arête de coupe d'attaque (432) du matériau dur dans la gorge (418) étant orientée à un angle de coupe positif (B) par rapport à une tangente à la surface de l'outil coupant.

10. Flan rotatif pour produire un outil coupant rotatif de l'une des revendications 6 à 9 par un procédé comme énoncé dans l'une des revendications 1 à 5 et comprenant un corps de flan (12) comportant une première et une seconde extrémités, des gorges dans les parois latérales du corps de flan (12) adjacentes à un emplacement auquel des congés concaves (14, 314, 414) sont censés être formés par la suite à un angle de coupe (B) sur l'arête d'attaque (15) de chaque congé (14, 314, 414), et un matériau dur sélectionné dans un groupe de matériaux se composant de diamant polycristallin et de nitrure de bore cubique fixé à l'intérieur des gorges (18, 318, 418) comportant au moins une arête qui est essentiellement orientée radialement à dans un angle qui est en conformité avec l'angle de coupe (B) des congés concaves (14, 314, 414) qui sont censés être formés par la suite de manière adjacente aux gorges (18, 318, 418) dans le flan coupant, de sorte que le matériau dur et le flan coupant peuvent être usinés par la suite afin de former les congés (14, 314, 414) et une arête de coupe (32, 332, 432) le long d'une arête d'attaque en angle formée par le matériau dur.

11. Flan coupant rotatif comme énoncé dans la revendication 10 dans lequel les gorges en angle (18, 318, 418) sont orientées à un angle de coupe positif (B) par rapport à une tangente à la surface du flan coupant.

12. Plan coupant rotatif comme énoncé dans la revendication 10 dans lequel les gorges en angle (18, 318, 418) sont orientées à un angle de coupe négatif (B) par rapport à une tangente à la surface du flan coupant.

13. Flan coupant rotatif comme énoncé dans la revendication 10 dans lequel les gorges (418) ont une forme de "V", une arête de coupe d'attaque (432) du matériau dur dans la gorge (418) étant orientée à un angle de coupe positif (B) par rapport à une tangente à la surface du flan coupant.
